# EUROPEAN PATENT APPLICATION

(11) **EP 3 671 597 A1**
(43) Date of publication of application: **24.06.2020**
(21) Application number: 18214315.6
(22) Date of filing: 20.12.2018
(51) Int. Cl.: G06Q 10/10

(54) **MANUFACTURING OPERATION UNIVERSAL SEARCH ENGINE AND METHOD**

(71) Applicant: Siemens Aktiengesellschaft, 80333 München (DE)
(72) Inventor: LONVAUD, Philippe, 44100 Nantes (FR); da Cruz Yera Barbosa, Thiago, 31770 Colomiers (FR)
(74) Representative: Maier, Daniel Oliver

(57) **Abstract**

The present invention concerns a method and a system for MES manufacturing operation retrieval, the method comprising the steps of:
a) acquiring (101) an identifier (I) of an Entity (C);
b) automatically determining (102) a user context in connection with said Entity (C) and a user, wherein the user context is defined by a set of data comprising a permission data, a used-device data, and a location data;
c) automatically generating (103) a search event and distributing said search event to all Apps within the MES that comprise an event handler, wherein the search event comprises said set of data and the identifier (I);
d) receiving (104) from one or several of said event handlers a list of authorized operations; and
e) automatically displaying (105) the received list to the user.

## Description

The present invention relates to a Manufacturing Operation Universal Search Engine (MOUSE) and a corresponding method. More precisely, the MOUSE is a system for automatically retrieving a manufacturing operation in a manufacturing execution systems (MES).

As defined by the Manufacturing Enterprise Solutions Association (MESA International http://www.mesa.org), a MES/MOM system «is a dynamic information system that drives effective execution of manufacturing operations». This is done by managing «production operations from point of order release into manufacturing to point of product delivery into finished goods» and by providing «mission critical information about production activities to others across the organization and supply chain via bi-directional communication». Most recently, the term Manufacturing Operation Management (MOM) is more and more used to replace the term MES. However, in this document the term MES will be used and understood in both meanings as cited before.

The functions that MES/MOM systems usually include, in order to improve quality and process performance of manufacturing plants, are resource allocation and status, dispatching production orders, data collection/acquisition, quality management, maintenance management, performance analysis, operations/detail scheduling, document control, labor management, process management and product tracking.

Particularly in the context of Discrete manufacturing, Process manufacturing, and Pharmaceutical industries, the MES helps companies to design and drive very complex manufacturing processes. The latter cover the creation of electronic batch records, equipment's management, material, work orders administration, etc. They can embed human and automated operations, orchestrated in large workflows, executed over a long period.

The MES also provides a large set of dedicated functions to administrate artifacts used and created along the manufacturing process.

To satisfy this wide functional scope, typical MES are composed by several modules (Apps) that can be organized and configured as a solution to fit Customers' requirements. Consequently, the solution may finally appear to end-user as a complex assembly of useful modules. Usually, navigation through these modules is done by rich menu, list item, and button selection; it can also be strongly driven through an operational manufacturing workflow that will display only relevant Manufacturing Operations for a work order.

As deployed MES solutions become more and more complex, user experience and usage efficiency decrease, mainly due to the long navigation path required to reach the desired operation and/or the complexity of 'home' screens displaying Apps, list of Entities and available operations.

Indeed, most existing solutions are focused on a strong investment in user-related features, trying to optimize as much as possible the user interface and the way users are driven in the usage of the MES solution. A clear drawback is to decrease flexibility of the final solution by delivering known Apps/Modules/Screens. This static assembly of features, known a priori, allows features wiring and can be used to propose, a priori, a navigation path which is unfortunately not evolutive or enough flexible to automatically adapt to changes within the MES.

An objective of the present invention is to propose a system and a method for efficiently discovering and reaching, in a complex deployed MES, a specific operation available for a specific Entity in a current User context (location in the plant, permissions, device used).

This objective is achieved according to the present invention by a method and system for MES manufacturing operation retrieval according to the object of the independent claims. Dependent claims present further advantages of the invention.

In the context of the present invention, the following definitions will be used:
- an Entity is an 'object', physical or digital, which could be modified, used, created by the MES user. In any MES, it is identified uniquely by an identifier (Id), e.g. a code. It can be a container, a work order, a tank, a material, a lot, an electronic batch record, etc.;
- an Operation is an action done on an Entity. It can be a tank cleaning, release a work order, allocate a workroom, etc. ;
- an App is a module comprised within the MES and which is configured for controlling/performing an operation, for instance within a specific domain. It can be equipment management, material administration, activity planning and scheduling, etc.;
- a Skill is a useful operation provided by an App.

The present invention proposes in particular a system for MES manufacturing operation retrieval configured for retrieving (or searching or discovering) for a user among Apps deployed within a MES any operation relevant to a specific Entity and a user context within a plant, the system comprising:
- an input device configured for acquiring an identifier of an Entity. Said input device is for example a scanner which is configured for acquiring the identifier of said Entity by scanning a barcode attached to said Entity, or it can be a free text input device wherein a user can type a text representing an identifier of said Entity, said typed text being thereby acquired by the free text input device;
- a module configured for determining a user context, wherein said module is configured for automatically collecting permission data of the user, a used-device data identifying a device currently used by the user like a tablet or a computer, and a location data defining a current location of the user within the plant, said user context being defined by a user context set of data comprising at least the permission data, the used-device data, and the location data;
- a search module configured for generating a search event and distributing said search event to all Apps within the MES that comprise an event handler, wherein the search event comprises said user context set of data and the identifier of the Entity. The search event might also be called a "search query". According to the present invention, the search event is configured for automatically launching a search, by means of the event handler, of all operations within the App that are related to the Entity and authorized with respect to the user context set of data, i.e. which are authorized for the Entity with respect to the user permissions, the user current location, and for the device currently used by the user. In particular, each App according to the invention comprises an event handler and a repository. The repository preferably comprises a list of operations controlled by said App, wherein for each operation, a list of Entities, a user location and/or Entity location within the plant, a user permission, and a set of predefined devices for which each operation is authorized are defined. The reception of the search event by the event handler makes the latter automatically querying the repository for finding operations that are authorized for the user context linked to the search event and creating a list of all authorized operations for the Entity, and sending back said list to the search module. The search module is then further configured for receiving from each event handler a list of authorized operations, merging all received lists in a single list and displaying said single list on a display for the user, for instance on a display of said device currently used by the user. Preferentially, the list of operations might be classified according to one or several criteria, wherein each criterion may have a weighting representing its importance with respect to said classification.

The present invention concerns also a method for MES manufacturing operation retrieval configured for retrieving for a user among Apps deployed within a MES any operation relevant to both a specific Entity and a user context defined with respect to a plant, the method comprising:
- acquiring an identifier of an Entity. Said acquisition might be realized by the previously described input device;
- automatically determining a user context, comprising automatically collecting permission data of the user, a used-device data identifying a device currently used by the user, and a location data defining a current location of the user within the plant, said user context being defined by a user context set of data comprising at least the permission data, the used-device data, and the location data;
- automatically generating a search event and distributing said search event to all Apps within the MES comprising an event handler, wherein the search event comprises said user context set of data and the identifier, wherein said search event is configured for automatically launching a search, by means of the event handler of each of the Apps to which the search event has been distributed, of all operations within said App that are related to the Entity and authorized with respect to the user context set of data;
- receiving from one or several event handlers a list of authorized operations, merging all received lists in a single list and displaying said single list to the user.

Advantageously, the present invention proposes a flexible solution composed by an assembly of Apps, on demand, and adapted to customer's requirements, and which enables to efficiently discover and reach, in complex deployed MES, the right Operation available for the right Entity in a current User context (e.g. location in a plant, permissions, device used).

Preferred but not exclusive embodiments of the invention will now be described with reference to the accompanying drawing, which depicts in:

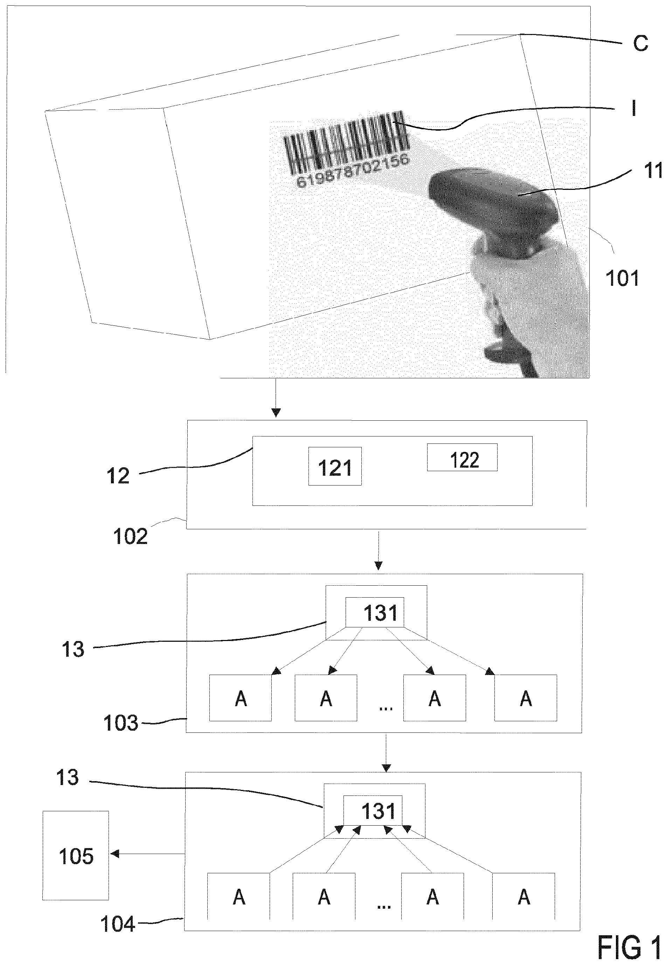

Figure 1 schematically a flowchart representing a method according to the invention.

Figure 1 schematically provides an example of a method for MES manufacturing operation retrieval. Said method enables a user to search and retrieve one or several operations defined and/or controlled by Apps comprised within a MES and that are relevant of a specific Entity.

At step 101, an identifier I of the Entity is acquired by means of an input device 11 of a system for MES manufacturing operation retrieval. Said Entity can be a machine, a material, a tool, an equipment, a work order id, etc., located within the plant or plant system (e.g. on a label, on the wall, on a paper, etc.). According to the present schematic case, it is a container C. Typically, a user selects an Entity within a plant and for which he would like to get information about manufacturing operations that are available for said Entity. The identifier I is for instance a barcode attached to the Entity, for instance apposed to a face of the container C. Said acquisition might be realized automatically, for instance by a machine or a robot comprising said input device 11, or manually by a user using said input device 11. The input device is for instance a scanner or a free text box of the system according to the invention and which enables a user to input a text. In particular, the user might type in said free text box said identifier I or scan it by means of the scanner so that the identifier I is acquired, and therefore known, by the system according to the invention.

At step 102, a module 12 of the system for MES manufacturing operation retrieval automatically determines a user context for said Entity identified through its identifier I and with respect to the user who is searching for manufacturing operations for said Entity. Said module 12 may comprise a processor 121 and a memory 122 and is preferentially configured for being connected to a network of a manufacturing system or of a plant system. In order to determine said user context, the module 12 automatically collects
- permission data of the user. Said permission data might be automatically collected from a database of the manufacturing or plant system. Said permission data define authorizations of the user notably with respect to the Entity and the operations the user is authorized to order and/or control for said Entity;
- a used-device data. Said used-device data comprises information regarding a device currently used by the user, said device currently used by the user is preferentially said input device 11 or any device that a user is currently using. For instance, the user may scan a barcode with a scanner, which sends the barcode data to a tablet to which it is wirelessly connected, said tablet being then recognized by the system according to the invention as the device currently used by the user; and
- a location data. The latter is notably determined from a current location within a plant of said device currently used by the user which defines also a current location of the user within the plant. Said location data might also comprise the position of the Entity within the plant. The system according to the invention comprises in particular a map of the plant or manufacture wherein said Entity is located, like a building map, and is able to determine the position of the user and/or of the Entity on the map from tracking in real time the position within the plant of the device currently used by the user and/or respectively from tracking any motion of the Entity within the plant.

The user context is then defined by a user context set of data comprising at least the permission data, the used-device data, and the location data. Said user context set of data is automatically determined by the module 12.

At step 103, a search module 13 of the system according to the invention automatically generates a search event 131 and distributes said search event to a selection of Apps A within the MES system, wherein the search event comprises the user context set of data and the identifier I. Said selection of Apps A comprises all Apps A that comprise an event handler. The reception of the search event by each of said Apps A automatically launches a search, by means of their respective event handlers, of all operations within the App that are related to the Entity and authorized or available with respect to the user context set of data. For instance, the event handler will automatically determine a set of operations for the container C in function of the current location of the user and/or of said container C, the permissions of the user and the device currently used by the latter. Such set of operations might comprise moving the container C to a specific areal, cleaning the container C, filling the container C, but for instance it would not comprise emptying the container C since the user has no permission for emptying such container C. Each App therefore checks, by means of its event handler, whether some manufacturing operations it controls and/or performs is relevant for the Entity when considering the permissions of the user, his location and/or the location of the Entity, and the device the user is currently using.

At step 104, the search module 13 receives from the event handler of each App A comprising such an event handler a list of operations that are authorized and/or available for the Entity according to or in function of the previously defined user context set of data. In particular, each event handler is configured for automatically generating such a list. Said list is the search results obtained when searching for operations available for the Entity when considering the user context set of data. Preferentially, the search module automatically merges all received lists into a single list.

At step 105, the system automatically displays the operations (i.e. the name of the manufacturing operations) that were comprised within the received lists, or preferentially said single list, to the user. Preferentially, said single list is displayed on the device currently used by said user. The latter may then select one of the manufacturing operations listed in said single list. For instance, by clicking on one of said manufacturing operations, the user is directly redirected to a document or information concerning said manufacturing operation.

Preferentially, the search module 13 and the module 12 are one and a same module having the functionalities and comprising the features of both the module 12 and the search module 13.

The present invention concerns also a MES comprising the system previously described and configured for carrying out the previously described claimed steps.

Compared to existing solutions, the present invention proposes a new way of discovering and reaching the right operation available for the right Entity according to a current user context. The system according to the invention automatically discovers the operations which could be relevant for the user according to a current context and proposes a direct access to these operations. To summarize, the present invention uses an agnostic operation discovery based on events and unlimited list of subscriber Apps, i.e. each App comprising an event handler.

## Claims

1. Method for MES manufacturing operation retrieval, the method comprising the steps of:
a) acquiring (101) an identifier (I) of an Entity (C);
b) automatically determining (102) a user context in connection with said Entity (C) and a user, wherein the user context is defined by a set of data comprising a permission data, a used-device data, and a location data;
c) automatically generating (103) a search event and distributing said search event to all Apps within the MES that comprise an event handler, wherein the search event comprises said set of data and the identifier (I);
d) receiving (104) from one or several of said event handlers a list of operations that are authorized and/or available for the Entity in function of the set of data; and
e) automatically displaying (105) the operations comprised within the received lists to the user.

2. The method according to claims 1, comprising automatically collecting
- the permission data,
- the used-device data, and
- the location data,
for creating said set of data.

3. The method according to claim 1 or 2, wherein said search event is configured for automatically launching a search, by means of the event handler of the App, of all operations within the App that are related to the Entity (C) and authorized or available with respect to the set of data.

4. The method according to one of the claims 1 to 3, wherein all received lists are automatically merged into a single list to be displayed to the user.

5. System for MES manufacturing operation retrieval configured for retrieving for a user among Apps deployed within a MES any operation relevant to an Entity and a user context within a plant, the system comprising:
- an input device (11) configured for acquiring an identifier (I) of an Entity (C);
- a module (12) configured for determining a user context defined by a set of data comprising a permission data, a used-device data, and a location data;
- a search module (13) configured for generating a search event and distributing said search event to all Apps within the MES that comprise an event handler, wherein the search event comprises said set of data and the identifier (I), the search module (13) being further configured for receiving from each event handler, in response to the previously distributed search event, a list of operations that are authorized and/or available for the Entity in function of the set of data, and displaying the operations comprised within the received lists on a display for the user.

6. System according to claim 5, wherein the input device (11) is a scanner or a free text input device.

7. System according to claim 5 or 6, wherein the module (12) is configured for automatically collecting permission data of the user, a used-device data identifying a device currently used by the user, and a location data defining a current location of the user within the plant.

8. System according to one of the claims 5 to 7, wherein the search event is configured for automatically launching a search, by means of the event handler, of all operations within the App that are related to the Entity and authorized and/or available with respect to the set of data.

9. System according to one of the claims 5 to 8, wherein the search module (13) is further configured for merging all received lists in a single list and displaying said single list on the display for the user.

10. System according to claim 9, wherein the search module (13) is configured for automatically classifying the operations in said single list according to one or several criteria, wherein each criterion has a weighting representing its importance with respect to the classification.

11. MES comprising the system according to one of the claims 5 to 10.

12. A computer program product for performing the steps of the method according to any of claims 1 to 4.
